Europäisches Patentamt

European Patent Office

Office européen des brevets

(11) Publication number: **0 198 341 B1**

# EUROPEAN PATENT SPECIFICATION

(45) Date of publication of patent specification: **15.07.92** (51) Int. Cl.⁵: **G06F 7/00**

(21) Application number: **86104525.0**

(22) Date of filing: **03.04.86**

(54) **Digital data processing circuit having a bit reverse function.**

(30) Priority: **03.04.85 JP 70230/85**

(43) Date of publication of application:
**22.10.86 Bulletin 86/43**

(45) Publication of the grant of the patent:
**15.07.92 Bulletin 92/29**

(84) Designated Contracting States:
**DE FR GB**

(56) References cited:
**US-A- 3 812 467**
**US-A- 4 181 976**

**ELECTRONIC DESIGN, vol. 32, no. 1, 12th January 1984, pages 385-389,391, Rochelle Park, US; B. BAILEY: "Barrel-shifter IC manipulates up to 32 bits"**

**IBM TECHNICAL DISCLOSURE BULLETIN, vol. 21, no. 4, September 1978, pages 1379,1380, New York, US; J.E. GERSBACH: "High-speed shifter array"**

(73) Proprietor: **NEC CORPORATION**
**7-1, Shiba 5-chome Minato-ku**
**Tokyo 108-01(JP)**

(72) Inventor: **Neki, Katsuhiko**
**c/o NEC Corp. 33-1, Shiba 5-chome**
**Minato-ku Tokyo(JP)**

(74) Representative: **Glawe, Delfs, Moll & Partner**
**Patentanwälte**
**Postfach 26 01 62 Liebherrstrasse 20**
**W-8000 München 26(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 198 341 B1

**Description**

BACKGROUND OF THE INVENTION

Field of the Invention

The present invention relates to a digital data processing circuit having a bit reverse function and more particularly to a digital data processing circuit suitable for a digital signal processor with fast Fourier transform (FFT) function.

Description of the Prior Art

When a discrete Fourier transform (DFT) is performed by a digital signal processor, the FFT algorithm is usually employed. In order to perform the FFT, the order of a bit string of a data to be processed has to be reversed. The data to be processed is usually stored in a memory. To reverse the order of the bit string, the data is read out of the memory and is processed by means of software technology or a hardware circuit. It is important to reverse the order of the bit string at a high speed in order to enhance a signal processor's performance.

With respect to the bit reverse, various techniques have been proposed. For example, a table memory in which data having a reversed bit string are preliminarily stored is used in the prior art. The stored data having the reversed bit string is read out of the table memory at need. This prior art, however, requires a large amount of memory capacity and is unsuitable for a small size signal processor chip. Therefore, a hardware circuit to reverse the bit string is effective in the signal processor chip.

A bit reverse circuit proposed in the prior art uses a plurality of switching gates inserted between a bus and a register. A bit string of a data in the register is reversed and derived from the register via the switching gates. Thus, the bit reverse operation can be performed at a high speed without a large amount of memory capacity. However, the abovementioned bit reverse circuit can not reverse a part of the bit string, selectively. In other words, a full bit string or a fixed bit string is only reversed. Therefore, in the case that a bit reverse operation for a part of a data or for arbitrary bits of a data is required, the prior art bit reverse circuit is not satisfied and is incomplete. Never the less, the device described in the disclosure US-A-4181976 operates a reversing of a part of a bit string. The document "Electronic Design, January 12, 1984, pages 385-391 discloses a device including a bit reversal multiplexer connected to a shifter, but it does not teach the reversing of a part of a bit string.

An object of the present invention is to provide a data processing circuit having a bit reverse function of a part or arbitrary bits of a data.

Another object of the present invention it to provide a data processing circuit suitable for a signal processor having the FFT function.

Summary of the Present Invention

A data processing circuit having a bit reverse function according to claim 1 comprises a bit reverse circuit which reverses a full bit string of a data or a fixed part of a bit string of a data and a shifting circuit coupled to the bit reverse circuit through a bus.

The bit reverse circuit includes a plurality of switching gates for reversing the full bit string or the fixed part of a bit string. The shifting circuit receives the data having a reversed bit string and shifts the received data rightwardly or leftwardly according to a required shift value. Thus, both a full bit string or a fixed part of a bit string and a part of a bit string or arbitrary bits of a bit string can be easily reversed at a high speed.

A further embodiment of the invention is defined in the appended dependent claim.

Brief Description of the Drawings

Fig. 1    indicates a circuit diagramm of a data processing circuit having a bit reverse function according to an embodiment of the present invention;
Fig. 2    indicates a block diagram of a related portion in a signal processor chip having a data processing circuit of the present invention; and
Fig. 3    indicates a timing chart of the data processing circuit in Fig. 2.

Detailed Description of Embodiments

2

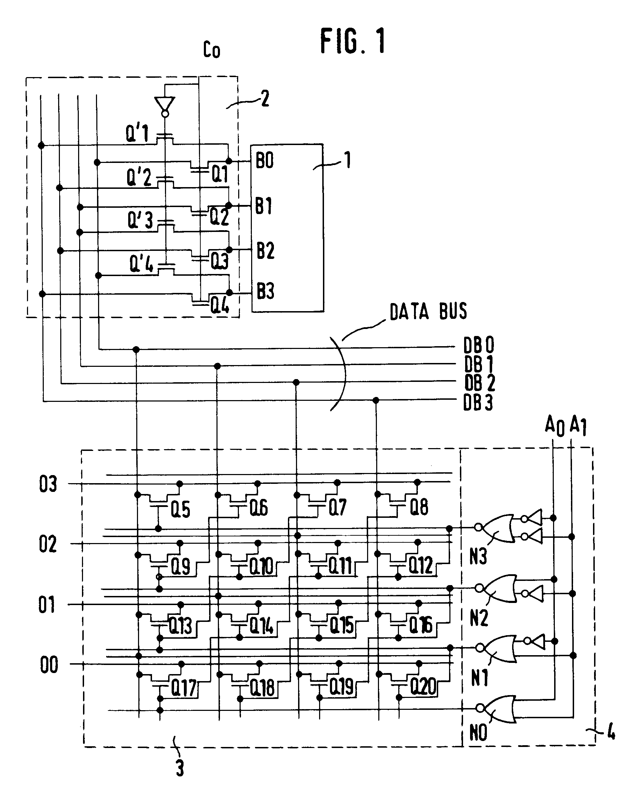

Referring to Fig. 1 a data processing circuit manipulating a data with 4 bits B0 to B3 is indicated. A register 1 can store a data of 4 bits B0 to B3 and is coupled to a bus having 4 signal lines DB0 to DB3 via a bit reverse circuit 2. The bus is coupled at an input end of a shifting circuit 3. In detail, the signal lines DB0 to DB3 are coupled to input terminals $I_0$ to $I_3$, respectively. A data with a reverses bit string is derived from output terminals 00 to 03 of the shifting circuit 3.

The bit reverse circuit 2 has a first group of switching transistors $Q_1$ to $Q_4$ and a second group of switching transistors $Q'_1$ to $Q'_4$. The first group of transistors $Q_1$ to $Q_4$ are turned on at the same time in response to a control signal $C_0$, while the second group of transistors $Q'_1$ to $Q'_4$ are turned on at the same time in response to an inverted control signal $C_0$. That is, the first group transistors and the second group transistors are switched exclusively for each other. The transistors $Q_1$ to $Q_4$ are connected to the signal lines DB0 to DB3, respectively, while the transistors $Q'_1$ to $Q'_4$ are connected to the signal lines DB3 to DB0, respectively. Thus, when the first group of transistors $Q_1$ to $Q_4$ is selected, bits B0 to B3 of a data stored in the register 1 are transferred to the signal lines DB0 to DB3 as they are, respectively. On the other hand, when the second group of transistors $Q'_1$ to $Q'_4$ is selected, the bits B3 to B0 are transferred to the signal lines DB0 to DB3, respectively. In the latter case, a data having a reversed bit string (B3, B2, B1, B0) is transferred to the bus.

As described above, a full bit string of a data in the register 1 is reversed by the bit reverse circuit 2. Further, in the case that the bit reverse circuit 2 is employed to a part of a bit string, a fixed part of the bit string may be reversed. However, the bit reverse circuit 2 can not reverse a variable part of the bit string of the data in the register 1. Therefore, to obtain the data in which a required bits of the bit string are selectively reversed or in which the order of the bit string is changed arbitrary, the shifting circuit 3 is provided.

The shifting circuit 3 has a plurality of switching transistors (16 transistors $Q_5$ to $Q_{20}$ in this embodiment) arranged in a matrix shape. The transistors $Q_5$, $Q_9$, $Q_{13}$ and $Q_{17}$ are coupled in common to the signal line DB0 via the input terminal $I_0$ at their one ends. The transistor $Q_6$, $Q_{10}$, $Q_{14}$ and $Q_{18}$ are coupled in common, at their one ends to the signal line DB1 via the input terminal $I_1$. The transistors $Q_7$, $Q_{11}$, $Q_{15}$ and $Q_{19}$ are coupled in common at their one ends to the signal line DB2 via the input terminal $I_2$. The transistors $Q_8$, $Q_{12}$, $Q_{16}$ and $Q_{20}$ are coupled in common at their one ends to the signal line DB3 via the input terminal $I_3$. The other ends of the transistors $Q_5$ to $Q_8$ are connected to the output terminal 03. The other ends of the transistors $Q_9$ to $Q_{12}$ are connected to the output terminal 02 in common. The other ends of the transistors $Q_{13}$ to $Q_{16}$ are connected in common to the output terminal 01. The other ends of the transistors $Q_{17}$ to $Q_{20}$ are connected in common to the output terminal 00.

The transistor matrix shown in Fig. 1 is divided into four groups: a first group of $Q_5$, $Q_{12}$, $Q_{15}$ and $Q_{18}$; a second group of $Q_6$, $Q_9$, $Q_{16}$ and $Q_{19}$; a third group of $Q_7$, $Q_{10}$, $Q_{13}$ and $Q_{20}$; and a fourth group of $Q_8$, $Q_{11}$, $Q_{14}$ and $Q_{17}$. These four groups are selectively controlled by an output of a decoding circuit 4 receiving a data ($A_0$ and $A_1$) representing a shift value. Transistors of the first group are selected and turned on at the same time in response to an output of an NOR gate $N_3$ which generates an active signal when $A_0$ and $A_1$ are both "1". Transistors of the second group are selected and turned on at the same time in response to an output of an NOR gate $N_2$ which generates an active signal when $A_0$ and $A_1$ are "0" and "1", respectively. Transistors of the third group are selected and turned on at the same time in response to an output of an NOR gate N, which generates an active signal when $A_0$ and $A_1$ are "1" and "0", respectively.

Transistors of the fourth group are selected and turned on in response to an output of an NOR gate $N_0$ which generates an active signal when $A_0$ and $A_1$ are both "0".

The relation between an input data and an output data of the shifting circuit 3 will be described in table 1.

TABLE 1

| DB0 | DB1 | DB2 | DB3 | $C_0$ | $A_0$ | $A_1$ | O0 | O1 | O2 | O3 |
|---|---|---|---|---|---|---|---|---|---|---|
| B0 | B1 | B2 | B3 | 1 | 0 | 0 | B0 | B1 | B2 | B3 |
| B0 | B1 | B2 | B3 | 1 | 1 | 0 | B3 | B0 | B1 | B2 |
| B0 | B1 | B2 | B3 | 1 | 0 | 1 | B2 | B3 | B0 | B1 |
| B0 | B1 | B2 | B3 | 1 | 1 | 1 | B1 | B2 | B3 | B0 |
| B3 | B2 | B1 | B0 | 0 | 0 | 0 | B3 | B2 | B1 | B0 |
| B3 | B2 | B1 | B0 | 0 | 1 | 0 | B0 | B3 | B2 | B1 |
| B3 | B2 | B1 | B0 | 0 | 0 | 1 | B1 | B0 | B3 | B2 |
| B3 | B2 | B1 | B0 | 0 | 1 | 1 | B2 | B1 | B0 | B3 |

As shown in table 1, when the control signal $C_0$ and the $A_0$ and $A_1$ are all "0", the data with the full bit reversed string is obtained at the output end of the shifting circuit 3. When the control signal $C_0$ and the $A_0$ and $A_1$ are "0", "1", "0", respectively, upper 3 bits are selectively reversed. While, low 2 bits are reversed when $C_0$, $A_0$, $A_1$ are "0", "0", "1", respectively. When $C_0$, $A_0$, $A_1$ are "0", "1", "1", respectively, lower 3 bits are reversed. Thus, a full bit string or a part of the bit string can be selectively reversed at a high speed with a small amount of memory capacity. Further, as shown in table 1, arbitrary bits can be changed or shifted according to the combination of the $C_0$, $A_0$ and $A_1$. The present invention can also be applied to reverse a data having N bits (N ≥ 2).

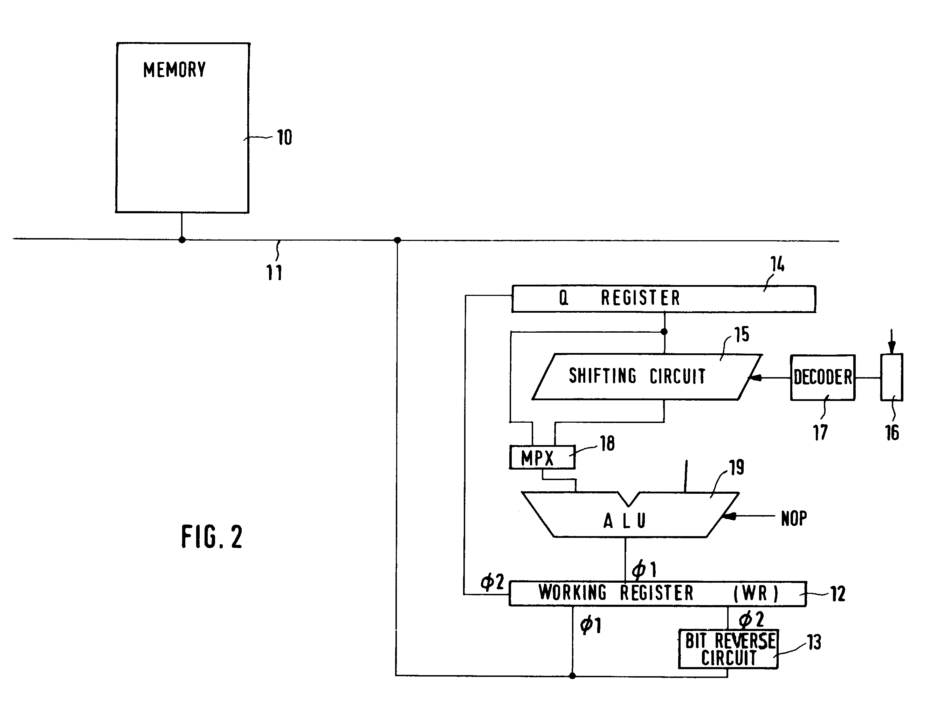

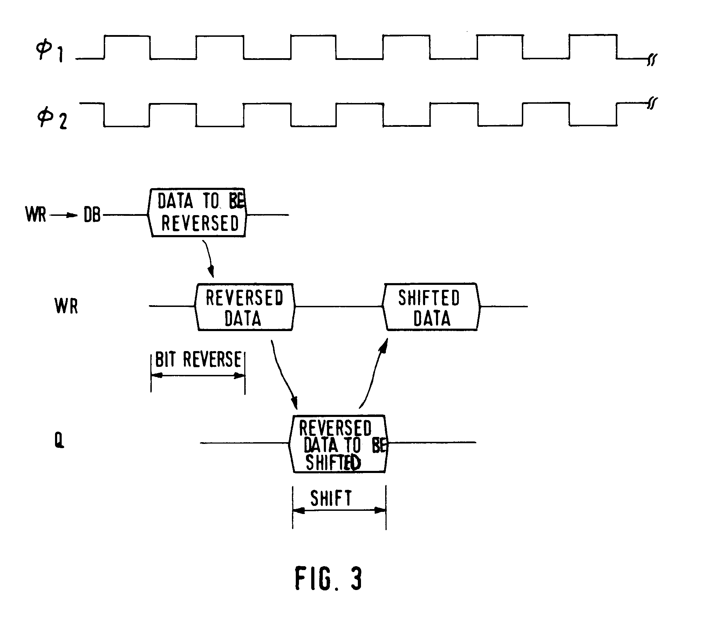

Fig. 2 indicates a block diagram of a principal part of a signal processor chip. A working register (WR) 12 which stores 55 bits is coupled to a memory 10 storing a plurality of data to be processed in accordance with the FFT algorithm via a system bus 11. A data to be reversed is read out of the memory 10 and is entered into the working register 12 in respone to a clock signal $\emptyset_1$ shown in Fig. 3. The data entered into the working register 12 is read out thereof in response to a clock signal $\emptyset_2$. The bit string of the read-out data is reversed fully by a bit reverse circuit 13. Thereafter the reversed data is restored in the working register 12 in response to the clock signal $\emptyset_1$. The reversed data is transferred to a Q register 14 in response to the clock signal $\emptyset_2$. The Q register 14 is coupled to a shifting circuit (a barrel shifter or a lateral shifter) 15. The shifting circuit 15 shifts the data of the Q register 14 according to the result of a decoder 17 which receives a data representing a shift value from a register 16 to which the data is preliminarily stored by means of a program control, a key input operation or the like. The output of the shifting circuit 15 which may be the same circuit as that of Fig. 1 is applied at one input end of an arithmetic logic unit (ALU) 19 via a multiplexer 18. At this time, the ALU 19 receives a no operation command (NOP). So that the output of the shifting circuit 15 is entered into the working register 12 as it is in response to the clock signal $\emptyset_1$.

As described above, by providing the shifting circuit 15, the multiplexer 18 and the bit reverse circuit 13 on the signal processor chip, a full bit string and a part of bit string of a data used in the FFT operation can be selectively reversed. Further, the reverse operation is performed at a high speed as shown in Fig. 3

**Claims**

1.  A data processing circuit having a set of data input terminals supplied with input data consisting of a string of bits (B0 to B3) and a set of data output terminals (00 to 03) from which output data is derived, said data processing circuit comprising a bit reverse circuit (2) including a set of input nodes each coupled to a corresponding one of said data input terminals and a set of output nodes (DB0 to DB4) for outputting bit reverse circuit output data and a shift circuit (3) including a set of input nodes each coupled to a corresponding one of said output nodes (DB0 to DB4) of said bit reverse circuit to receive said bit reverse circuit output data, a set of output nodes each coupled to a corresponding one of said data output terminals (00 to 03) and a set of control nodes supplied with control data representative of shift value, said shift circuit (3) shifting said bit reverse circuit output data by said shift value represented by said control data and outputting shifted data to said output nodes of said shift circuit (3) and hence to said data output terminals (00 to 03),

4

**characterized** in that said reverse control circuit (2) further includes a control node supplied with a control signal (C0) which is variable between a first logic level and a second logic level, said bit reverse circuit reversing a full bit string of said input data (B0 to B3) and outputting reversed data to said output nodes (DB0 to DB3) as said bit reverse circuit output data in response to said first logic level of said control signal (C0), and said bit reverse circuit outputting said input data (B0 to B3) to said output nodes (DB0 to DB3) as said bit reverse circuit output data without reversing any order to said bits of said input data (B0 to B3) in response to said second logic level of said control signal, whereby said data processing circuit reverses a full or partial bit string of said input data (B0 to B3) and produces output data having information representative of the reversed bit string of said input data in response to said first logic level of said control signal (C0), a number of bits of said partial bit string of said input data being determined by said shift value represented by said control data, and whereby said data processing circuit shifts said input data (B0 and B3) by said shift value represented by said control data and produces output data having information representative of the shifted input data in response to said second logic level of said control signal (C0).

2. The data processing circuit as claimed in claim 1 , **characterized** in that said bit reverse circuit further includes a first transistor (Q1) connected between a least significant bit input node of said input nodes and a least significant bit output node of said output nodes (DB0), a second transistor (Q4) connected between a most significant bit input node of said input nodes and a most significant bit output node of said output nodes (DB4), a third transistor (Q'1) connected between said least significant bit input node and said most significant bit output node (DB3), and a fourth transistor (Q'4) connected between said most significant bit input node and said least significant bit output node (DB0), said third and fourth transistors (Q'1, Q'4) being turned ON in response to said first logic level of said control signal (C0) and said first and second transistors (Q1, Q4) begin turned ON in response to said second logic level of said control signal (C0).

## Revendications

1. Circuit de traitement de données comportant un ensemble de bornes d'entrée de données qui reçoit une donnée d'entrée constituée d'une suite de bits (B0 à B3) et un ensemble de bornes de sortie de données ($0_0$ à $0_3$), à partir desquelles la donnée de sortie est obtenue, le circuit de traitement de données comprenant un circuit d'inversion de bits (2) comportant un ensemble de noeuds d'entrée chacun couplé à une borne correspondante des bornes d'entrée de données et un ensemble de noeuds de sortie (DB0 à DB4) pour sortir la donnée de sortie du circuit d'inversion d' bits et un circuit à décalage (3) comportant un ensemble de noeuds d'entrée chacun couplé à un noeud correspondant des noeuds de sortie (DB0 à DB4) du circuit d'inversion de bits pour recevoir la donnée de sortie du circuit d'inversion de bits, un ensemble de noeuds de sortie chacun couplé à une borne correspondante des bornes de sortie de données ($O_0$ à $O_3$) et un ensemble de noeuds de commande qui reçoit la donnée de commande représentative d'une valeur de décalage, le circuit à décalage (3) décalant la donnée de sortie du circuit d'inversion de bits pour la valeur de décalage représentée par la donnée de commande et sortant la donnée décalée vers les noeuds de sortie du circuit à décalage (3) et ainsi vers les bornes de sortie de données ($O_0$ à $O_3$),

caractérisé en ce que le circuit de commande d'inversion (2) comporte de plus un noeud de commande qui reçoit un signal de commande ($C_0$) qui est variable entre un premier niveau logique et un second niveau logique, le circuit d'inversion de bits inversant une suite de bits entière de la donnée d'entrée (B0 à B3) et sortant la donnée inversée aux noeuds de sortie (DB0 à DB3) en tant que donnée de sortie du circuit d'inversion de bits en réponse au premier niveau logique du signal de commande ($C_0$) et le circuit d'inversion de bits sortant la donnée d'entrée (B0 à B3) aux noeuds de sortie (DB0 à DB3) comme donnée de sortie du circuit d'inversion de bits sans inverser l'ordre quelconque des bits de la donnée d'entrée (B0 à B3) en réponse au second niveau logique du signal de commande, si bien que le circuit de traitement de données inverse une suite entière ou partielle de bits de la donnée d'entrée (B0 à B3) et produit une donnée de sortie présentant une information représentative de la suite de bits inversés de la donnée d'entrée en réponse au premier niveau logique du signal de conmande ($C_0$), un certain nombre de bits de la fuite de bits partielle de la donnée d'entrée étant déterminé par la mémoire de décalage représentée par la donnée de commande, et si bien que le circuit de traitement de données décale la donnée d'entrée (B0 et B0) de la valeur de décalage représentée par la donnée de commande et produit une donnée de sortie ayant une information représentative de la donnée d'entrée décalée en réponse au premier niveau logique du signal de

commande ($C_0$).

**2.** Circuit de traitement de données selon la revendication 1, caractérisé en ce que le circuit d'inversion de bits comporte de plus un premier transistor ($Q_1$) connecté entre un noeud d'entrée de bit de poids faible des noeuds d'entrée et un noeud de sortie du bit de poids faible des noeuds de sortie (DB0), un second transistor ($Q_4$) connecté entre un noeud d'entrée de bit de poids fort des noeuds d'entrée et un noeud de sortie du bit de poids fort des noeuds de sortie (DB4), un troisième transistor ($Q'_1$) connecté entre le noeud d'entrée du bit de poids faible et le noeud de sortie du bit de poids fort (DB3) et un quatrième transistor ($Q'_4$) connecté entre le noeud d'entrée du bit de poids fort et le noeud de sortie du bit de poids faible (DB0), les troisième et quatrième transistors ($Q'_1$, $Q'_4$) étant rendus conducteurs en réponse au premier niveau logique du signal de commande ($C_0$) et les premier et second transistors ($Q_1$, $Q_4$) commençant à conduire en réponse au second niveau logique du signal de commande ($C_0$).

**Patentansprüche**

**1.** Datenverarbeitungsschaltung mit einem Satz Dateneingangsanschlüsse, denen Eingangsdaten aus einer Reihe von Bits (B0 - B3) zugeführt werden, und einem Satz von Datenausgangsanschlüssen (00 - 03) von denen Ausgangsdaten abgeleitet werden, wobei die Datenverarbeitungsschaltung eine Bitumkehrschaltung (2) mit einem Satz Eingangsknoten aufweist, von denen jeder mit einem entsprechenden der Dateneingangsanschlüsse verbunder ist, und einem Satz Ausgangsknoten (DB0 - DB4) zur Ausgabe von Bitumkehrschaltungs-Ausgangsdaten, und einer Schiebeschaltung (3) mit einem Satz Eingangsknoten, von denen jeder mit einem entsprechenden der Ausgangsknoten (DB0 - DB4) der Bitumkehrschaltung verbunden ist zum Empfang der Bitumkehrschaltung-Ausgangsdaten, einen Satz von Ausgangsknoten, von denen jeder mit einem entsprechenden der Datenanschlüsse (00 - 03) verbunden ist und einem Satz Steuerknoten, der mit einem Verschiebewert darstellenden Steuerdaten versorgt wird, wobei die Schiebeschaltung (3) die Bitumkehrschaltungs-Ausgangsdaten um den durch die Steuerdaten repräsentierten Verschiebewert verschiebt und die verschobenen an die Ausgangsknoten der Schiebeschaltung (3) ausgibt und somit an die Datenausgangsanschlüsse (00 - 03), dadurch gekennzeichnet, daß die Umkehrsteuerschaltung (2) ferner aufweist einen Steuerknoten, der mit einem Steuersignal (C0) versorgt wird, das zwischen einem ersten logischen Pegel und einem zweiten logischen Pegel variabel ist, wobei die Bitumkehrschaltung eine vollständige Reihe der Eingangsdaten (B0 - B3) umkehrt und die umgekehrten Daten an die Ausgangsknoten (DB0 - DB3) als die Bitumkehrschaltungs-Ausgangsdaten ausgibt in Abhängigkeit vom ersten logischen Pegel des Steuersignals (C0), und wobei die Bitumkehrschaltung die Eingangsdaten (B0 - B3) an die Ausgangsknoten (DB0 - DB3) als Bitumkehrschaltungs-Ausgangsdaten ohne die Reihenfolge der Bits der Eingangsdaten (B0 - B3) umzukehren in Abhängigkeit von dem zweiten logischen Pegel des Steuersignals ausgibt, wobei die Datenverarbeitungsschaltung eine vollständige oder partielle Bitreihe der Eingangsdaten (B0 - B3) umkehrt und Ausgangsdaten erzeugt, die Informationen entsprechend der umgekehrten Bitreihe der Eingangsdaten enthält in Abhängigkeit von dem ersten logischen Pegel des Steuersignals (C0), wobei eine Anzahl von Bits der ersten partiellen Bitreihe der Eingangsdaten durch den durch die Steuerdaten repräsentierten Verschiebewert bestimmt sind, und wobei die Datenverarbeitungsschaltung die Eingangsdaten (B0 -B3) um den durch die Steuerdaten repräsentierten Verschiebewert verschiebt und Ausgangsdaten erzeugt, die Informationen entsprechend der verschobenen Eingangsdaten enthalten, in Abhängigkeit vom zweiten logischen Pegel des Steuersignals (C0).

**2.** Datenverarbeitungsschaltung nach Anspruch 1, dadurch gekennzeichnet, daß die Bitumkehrschaltung ferner einen ersten Transistor (Q1) aufweist, der zwischen dem Eingangsknoten für das niedrigstwertige Bit der Eingangsknoten und dem Ausgangsknoten für das niedrigstwertige Bit der Ausgangsknoten (DB0) geschaltet ist, einen zweiten Transistor (Q4), der zwischen dem Eingangsknoten für das höchstwertige Bit der Eingangsknoten und dem Ausgangsknoten für das höchstwertige Bit der Ausgangsknoten (DB4) geschaltet ist, einen dritten Transistor (Q'1), der zwischen den Eingangsknoten für das niedrigswertige Bit und den Ausgangsknoten (DB3) für das höchstwertige Bit geschaltet ist, und einen vierten Transistor (Q'4), der zwischen den Eingangsknoten für das höchstwertige Bit und den Ausgangsknoten (DB0) für das niedrigstwertige Bit geschaltet ist, wobei der dritte und der vierte Transistor (Q'1, Q'4) in Abhängigkeit von dem ersten logischen Pegel des Steuersignals (C0) eingeschaltet werden und der erste und der zweite Transistor (Q'1, Q'4) in Abhängigkeit von dem zweiten logischen Pegel des Steuersignals (C0) beginnen eingeschaltet zu werden.

# FIG. 1

FIG. 2

$\phi_1$

$\phi_2$

WR → DB — DATA TO BE REVERSED

WR — REVERSED DATA — SHIFTED DATA

|BIT REVERSE|

Q — REVERSED DATA TO BE SHIFTED

SHIFT

FIG. 3